# FASCICULE DE BREVET EUROPEEN

(11) **EP 3 417 253 B1**
(45) Date de publication et mention de la délivrance du brevet: **10.03.2021**
(21) Numéro de dépôt: 17713341.0
(22) Date de dépôt: 20.02.2017
(51) Int. Cl.: G01G 13/02, B65D 83/06

(54) **DISPOSITIF PORTABLE ET PROCÉDÉ DE DOSAGE, RÉSERVOIR, SYSTÈME COMPORTANT UN TEL DISPOSITIF ET RÉSERVOIR**
TRAGBARE VORRICHTUNG, ABGABEVERFAHREN, RESERVOIR UND SYSTEM MIT SOLCH EINER VORRICHTUNG UND EINEM RESERVOIR
PORTABLE DEVICE, DISPENSING METHOD, RESERVOIR, AND SYSTEM INCLUDING SUCH A DEVICE AND RESERVOIR

(30) Priorité: 19.02.2016 FR 1651356
(43) Date de publication de la demande: 26.12.2018
(73) Titulaire: Hernandez, Paul, 13770 Venelles (FR); Santo, Didier, 30350 Massanes (FR)
(72) Inventeur: Hernandez, Paul, 13770 Venelles (FR); Santo, Didier, 30350 Massanes (FR)
(74) Mandataire: Cornuejols, Georges
(86) Numéro de dépôt international: PCT/FR2017/050379
(87) Numéro de publication internationale: WO 2017/141000

(56) Documents cités:
- EP-A1- 0 618 426
- EP-A1- 1 930 702
- EP-A1- 2 826 722
- WO-A1-2007/090665

## Description

### DOMAINE TECHNIQUE DE L'INVENTION

La présente invention vise un dispositif portable de dosage, un réservoir comportant un ingrédient à doser par un tel dispositif, un système de dosage comportant un tel dispositif et un tel réservoir, et un procédé de dosage.

Elle s'applique, notamment, au domaine du dosage d'un grand nombre d'ingrédients pulvérulents.

### ETAT DE LA TECHNIQUE

A ce jour, il existe deux méthodes de dosage d'ingrédients pulvérulents, la méthode manuelle qui consiste à doser des pulvérulents à la main sur une balance avec affichage et une autre méthode qui consiste à avoir plusieurs trémies, équipées chacune d'éléments de délivrance, qui fonctionne de façon automatisée.

La méthode manuelle est peu onéreuse, mais éprouvante pour l'utilisateur, avec des risques d'erreurs et peu de traçabilité.

La seconde est très onéreuse, tributaire du nombre d'ingrédients, et assure une bonne traçabilité. Le document EP 2 826 722 A1 divulgue un dispositif portable de dosage d'au moins un ingrédient associé à une masse prédéterminée.

### OBJET DE L'INVENTION

La présente invention vise à remédier à tout ou partie de ces inconvénients comme énoncés dans les revendications indépendantes 1 et 15.

A cet effet, selon un premier aspect, la présente invention vise un dispositif portable de dosage d'au moins un ingrédient associé à une masse prédéterminée, qui comporte :
- des moyens de guidage en position en regard d'au moins un réservoir comportant un ingrédient à doser,
- des moyens de lecture d'un identifiant d'un ingrédient sur le réservoir comportant ledit ingrédient,
- des moyens motorisés de délivrance de l'ingrédient à doser depuis le réservoir,
- des moyens d'acquisition d'une mesure de masse de l'ingrédient,
- des moyens de commande configurés pour activer les moyens motorisés lorsque le réservoir de l'ingrédient à doser est identifié par les moyens de lecture d'un identifiant et le dispositif est mis en position en regard du réservoir, jusqu'à ce que la masse de l'ingrédient acquise par les moyens d'acquisition soit égale à la masse prédéterminée pour l'ingrédient.

Grâce à ces dispositions le dispositif peut être déplacé aisément par un utilisateur entre différents réservoirs comportant des ingrédients à doser. De plus, les moyens de lecture d'un identifiant permettent une vérification que l'utilisateur présente le dispositif de dosage au réservoir comportant l'ingrédient correct.

Aussi, la masse de l'ingrédient étant mesurée en continue, les erreurs sur la masse de l'ingrédient dosée sont contenues dans un intervalle de tolérance défini préalablement.

Le dispositif peut ainsi doser un ingrédient une fois mis en position sur le réservoir adéquat sans nécessiter de commande de la part d'un utilisateur.

Enfin, les moyens motorisés sur le dispositif permettent d'éviter de munir chaque réservoir comportant un ingrédient de moyens motorisés. La fabrication de chaque réservoir est donc moins onéreuse.

Dans des modes de réalisation, le dispositif objet de la présente invention comporte au moins deux récipients de réception de chaque ingrédient à doser, et les moyens de commande sont configurés pour activer, à chaque changement de récipient, les moyens motorisés lorsque le réservoir de l'ingrédient à doser est identifié par les moyens de lecture d'un identifiant et le dispositif est mis en position en regard du réservoir, jusqu'à ce que la masse de l'ingrédient acquise par les moyens d'acquisition soit égale à la masse prédéterminée pour l'ingrédient.

Grâce à ces dispositions, une fois le dispositif connecté à un réservoir, plusieurs récipients peuvent être remplis pour une production en série. En fonction de la masse acquise.

Dans des modes de réalisation, le dispositif objet de la présente invention comporte des moyens de lecture d'un identifiant d'un récipient et chaque récipient comporte un identifiant.

L'avantage de ces modes de réalisation est d'empêcher le remplissage d'un récipient deux fois, par inadvertance, si le récipient est replacé sur le dispositif, par exemple.

Dans des modes de réalisation, le dispositif objet de la présente invention comporte des moyens de communication sans fils configurés pour recevoir au moins une masse prédéterminée.

Ces modes de réalisation permettent aux masses prédéterminées d'être modifiées à distance par un utilisateur.

Dans des modes de réalisation, le dispositif objet de la présente invention comporte des moyens d'affichage d'au moins une masse prédéterminée et/ou d'au moins un identifiant de l'ingrédient à doser.

L'avantage de ces modes de réalisation est de permettre à un utilisateur de vérifier les quantités dosées par le dispositif ainsi que le nom de l'ingrédient à doser.

Dans des modes de réalisation, la mesure de la masse par les moyens d'acquisition est mise à zéro avant la mise en œuvre des moyens motorisés.

Ces modes de réalisation présentent l'avantage de d'obtenir, pour chaque ingrédient, la masse effectivement versée une fois l'ingrédient dosé.

Dans des modes de réalisation, les moyens motorisés comportent un moteur dont la vitesse est une fonction de la différence entre la masse acquise et la masse prédéterminée de l'ingrédient.

Ainsi, plus la masse acquise est proche de la masse prédéterminée de l'ingrédient, plus le moteur ralenti de sorte à avoir un dosage précis de l'ingrédient. Ces modes de réalisation permettent d'obtenir un débit de délivrance de l'ingrédient proportionnel à la quantité à délivrer.

Dans des modes de réalisation, les moyens de lecture d'un identifiant induisent un champ électromagnétique.

Grâce à ces dispositions, le dispositif peut interagir avec un support d'identifiant sur le réservoir telle une puce RFID (acronyme de « Radio Frequency Identification » en anglais) ou une étiquette NFC (acronyme de « Near Field Communication » en anglais), par exemple.

Dans des modes de réalisation, le dispositif objet de la présente invention comporte de plus un rail, disposé en regard d'au moins un réservoir, le rail comportant des moyens de déplacement du dispositif sur le rail.

Selon un deuxième aspect, la présente invention vise un réservoir comportant un ingrédient à doser par un dispositif objet de la présente invention, qui comporte :
- des moyens de maintien en position du dispositif correspondant aux moyens de guidage du dispositif,
- des moyens de délivrance de l'ingrédient à doser activés par les moyens motorisés de délivrance du dispositif,
- un support d'identifiant de l'ingrédient contenu par le réservoir correspondant aux moyens de lecture du dispositif.

Grâce à ces dispositions, le réservoir est passif et ne comporte pas de moyens motorisés. Le coût de fabrication d'un tel réservoir est donc diminué. De plus, chaque réservoir identifie l'ingrédient contenu par le réservoir pour que l'ingrédient dosé soit bien l'ingrédient à doser.

Dans des modes de réalisation, les moyens de délivrance comportent une vis sans fin mise en rotation par les moyens motorisés de délivrance du dispositif.

L'avantage de ces modes de réalisation est de pouvoir doser précisément l'ingrédient.

Dans des modes de réalisation, les moyens de délivrance comportent des moyens de vibration activés par les moyens motorisés de délivrance du dispositif.

Ces modes de réalisation permettent de répartir uniformément l'ingrédient dans le réservoir pour avoir une délivrance uniforme de l'ingrédient.

Dans des modes de réalisation les moyens de délivrance comportent des moyens de fluidification de l'ingrédient.

L'avantage de ces modes de réalisation est de rompre d'éventuels agglomérats d'un ingrédient pulvérulent pouvant créer des erreurs lors du dosage.

Dans des modes de réalisation, le support d'identifiant comporte une étiquette électronique activée par un champ électromagnétique.

Ces modes de réalisation permettent aux moyens de lecture du dispositif d'interagir avec le support d'identifiant du réservoir à distance.

Selon un troisième aspect, la présente invention vise un système de dosage d'au moins un ingrédient comportant au moins un réservoir objet de la présente invention et au moins un dispositif objet de la présente invention.

Les buts, avantages et caractéristiques particulières du système objet de la présente invention étant similaires à ceux du dispositif et du réservoir objets de la présente invention, ils ne sont pas rappelés ici.

Dans des modes de réalisation, seul le dispositif est alimenté en courant électrique.

Ces modes de réalisation permettent de rendre tous les éléments autres que le dispositif, passifs. C'est par exemple le cas des réservoirs qui ne nécessitent aucune alimentation électrique.

Selon un quatrième aspect, la présente invention vise un procédé de dosage d'au moins un ingrédient associé à une masse prédéterminée au moyen d'un système objet de la présente invention, qui comporte les étapes suivantes :
- guidage en position d'un dispositif en regard d'au moins un réservoir comportant un ingrédient à doser,
- lecture d'un identifiant d'un ingrédient sur le réservoir comportant ledit ingrédient,
- délivrance de l'ingrédient à doser depuis le réservoir,
- acquisition d'une mesure de masse de l'ingrédient,
- activation des moyens motorisés du dispositif lorsque le réservoir de l'ingrédient à doser est identifié par les moyens de lecture d'un identifiant du dispositif et le dispositif est mis en position en regard du réservoir, jusqu'à ce que la masse de l'ingrédient acquise par les moyens d'acquisition soit égale à la masse prédéterminée pour l'ingrédient.

Les buts, avantages et caractéristiques particulières du procédé objet de la présente invention étant similaires à ceux du dispositif, du réservoir et du système objets de la présente invention, ils ne sont pas rappelés ici.

### BREVE DESCRIPTION DES FIGURES

D'autres avantages, buts et caractéristiques particulières de l'invention ressortiront de la description non limitative qui suit d'au moins un mode de réalisation particulier du dispositif, du réservoir, du système et du procédé objets de la présente invention, en regard des dessins annexés, dans lesquels :
- la figure 1 représente, schématiquement et en perspective, un premier mode de réalisation particulier du dispositif objet de la présente invention,
- la figure 2 représente, schématiquement et en perspective, un premier mode de réalisation particulier du réservoir objet de la présente invention,
- la figure 3 représente, schématiquement et en perspective, un premier mode de réalisation particulier du système objet de la présente invention,
- la figure 4 représente, schématiquement et en perspective, un deuxième mode de réalisation particulier du système objet de la présente invention,
- la figure 5 représente, schématiquement et sous forme d'un logigramme, une succession d'étapes particulière du procédé objet de la présente invention,
- la figure 6 représente, schématiquement et en perspective, un troisième mode de réalisation particulier du système objet de la présente invention et
- la figure 7 représente, schématiquement et selon une seconde perspective, le troisième mode de réalisation particulier du système objet de la présente invention.

### DESCRIPTION D'EXEMPLES DE REALISATION DE L'INVENTION

La présente description est donnée à titre non limitatif, chaque caractéristique d'un mode de réalisation pouvant être combinée à toute autre caractéristique de tout autre mode de réalisation de manière avantageuse. Par ailleurs, chaque paramètre d'un exemple de réalisation peut être mis en œuvre indépendamment d'autres paramètres dudit exemple de réalisation.

On note dès à présent que les figures ne sont pas à l'échelle.

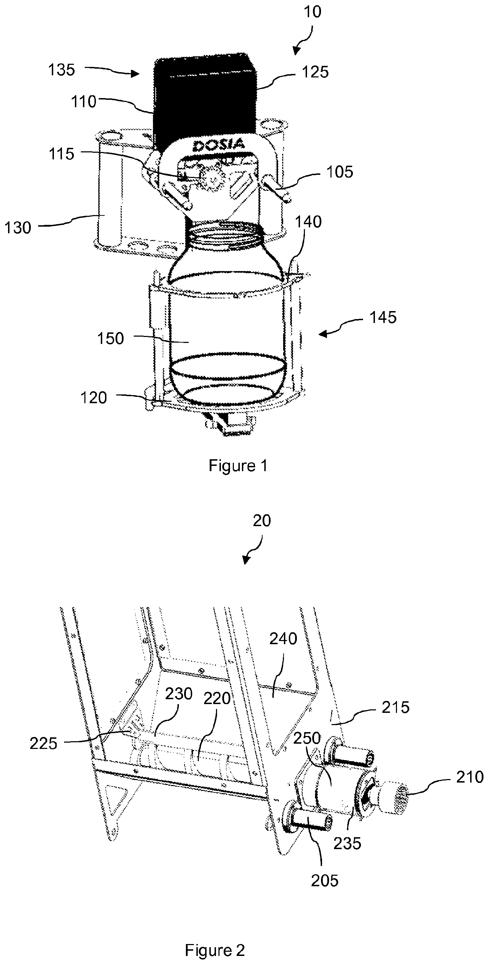

On observe, sur la figure 1, qui n'est pas à l'échelle, une vue schématique d'un mode de réalisation du dispositif 10 objet de la présente invention.

Le dispositif 10 portable de dosage d'au moins un ingrédient associé à une masse prédéterminée comporte des moyens de guidage 105 en position en regard d'au moins un réservoir 20 comportant un ingrédient à doser. Le dispositif 10 comporte un châssis. Les moyens de guidage 105 sont fixés au châssis.

Les moyens de guidage 105 en position sont au moins un relief s'emboîtant avec un relief correspondant 205 sur le réservoir 20. Préférentiellement, les moyens de guidage 105 sont deux tiges d'axes parallèles. Les moyens de guidage 105 en position sont tels que le récipient 150 du dispositif 10 est soutenu en position sensiblement horizontale.

Préférentiellement, les moyens de guidage 105 en position comportent une longueur de contact, par exemple, l'axe des tiges dans le cas de tiges. La longueur de contact est telle que le dispositif est supporté par le récipient 20 lorsque les moyens de guidage 105 sont insérés dans les moyens correspondants 205 du réservoir 20.

Préférentiellement, les moyens de guidage 105 en position, empêchent toute rotation du dispositif 10 par rapport au réservoir. Par exemple, les moyens de guidage en position 105 réalisent une liaison mécanique de type glissière entre le dispositif 10 et le réservoir 20.

Le dispositif 10 comporte des moyens de lecture 110 d'un identifiant d'un ingrédient sur le réservoir 20 comportant ledit ingrédient. L'identifiant d'un ingrédient peut comporter, un numéro d'identification, un nom de l'ingrédient, une composition chimique de l'ingrédient, par exemple. Les moyens de lecture 110 sont fixés au châssis.

Les moyens de lecture 110 de l'identifiant de l'ingrédient correspondent au support d'identifiant 215 du réservoir 20. Préférentiellement, les moyens de lecture 110 de l'identifiant sont préférentiellement induisent un champ électromagnétique, selon la norme ISO/CEI 14443. Les moyens de lecture 110 de l'identifiant peuvent être un lecteur de puce RFID (acronyme de « Radio Frequency Identification » en anglais, ou radio-identification en français), ou un lecteur NFC (acronyme de « Near Field Communication » en anglais, ou communication en champ proche en français). Dans ces modes de réalisation, le support d'identifiant 215 du réservoir 20 comporte une puce comportant l'identifiant et une antenne.

Dans d'autres modes de réalisation, les moyens de lecture 110 sont un lecteur de code à barres ou de code à barres en deux dimensions (communément appelés QR-code acronyme de « Quick Response Code » ou datamtrix, marque déposée). Dans ces modes de réalisation, le support d'identifiant 215 est un code à barres ou un code à barres en deux dimensions.

Dans d'autres modes de réalisation, les moyens de lecture 110 sont un capteur d'image effectuant une reconnaissance de caractères. Dans ces modes de réalisation, le support d'identifiant 205 est une étiquette imprimée et disposée sur le réservoir 20.

Le dispositif 10 comporte des moyens motorisés 115 de délivrance de l'ingrédient à doser depuis le réservoir 20. Les moyens motorisés 115 comportent un moteur et un relief s'emboitant avec un relief correspondant, sur le réservoir 20. Le relief est mobile en rotation, selon un axe, par rapport au dispositif 10. Le relief est mis en rotation par le moteur. Le moteur des moyens motorisés est fixé au châssis. Préférentiellement le moteur à une vitesse de rotation comprise entre zéro et cent-vingt tours par minute.

Préférentiellement, le relief est un arbre comportant des cannelures et le relief correspondant, sur le réservoir 20, est un moyeu comportant des cannelures correspondantes. Dans d'autres modes de réalisation, le relief est un moyeu comportant des cannelures et le relief correspondant, sur le réservoir 20, est un arbre comportant des cannelures correspondantes. L'accouplement des cannelures de l'arbre et du moyeu permet une transmission de puissance.

Dans les modes de réalisation dans lesquels les moyens de guidage 105 sont deux tiges d'axes parallèles, l'axe de rotation du relief est parallèle aux axes des tiges et situé à équidistances des axes des tiges. Ces modes de réalisation permettent de répartir les efforts dus à l'actionnement des moyens motorisés 115 uniformément sur chaque tige.

Les moyens motorisés 115 et les moyens de guidage 105 sont situés sur une même face du dispositif 10. Préférentiellement, les moyens de lecture 110 sont situés d'un côté de ladite face.

Le dispositif 10 comporte des moyens d'acquisition 120 d'une mesure de masse de l'ingrédient. Les moyens d'acquisition 120 d'une mesure de masse de l'ingrédient sont préférentiellement situés en proéminence d'un autre côté de ladite face. Les moyens d'acquisition 120 d'une masse sont une balance. La balance est préférentiellement une balance électronique une partie de la balance est fixée au châssis du dispositif 10 et l'autre est mobile et placée sous le récipient 150.

Dans des modes de réalisation préférentiels, les moyens d'acquisition 120 sont tels qu'une ouverture du récipient 150 soit située sous une ouverture de délivrance d'un ingrédient du réservoir 20. Les dimensions entre les moyens d'acquisition 120, les moyens motorisés 115 et les moyens de guidage en position 105 sont supérieures aux dimensions du récipient 150.

Préférentiellement, le dispositif 10 comporte des moyens de maintien en position 140 du récipient 150. Les moyens de maintien en position 140 du récipient 150 sont un relief encerclant au moins partiellement le récipient 150. Les moyens de maintien en position 140 sont fixés au châssis et situés entre les moyens d'acquisition 120 et les moyens de guidage en position 105 ou les moyens motorisés 115.

Les moyens de maintien en position 140 peuvent être configurés pour maintenir en position des récipients 150 sous forme de sachets ou des pots.

Le dispositif 10 comporte des moyens de commande 125 configurés pour activer les moyens motorisés 115 lorsque le réservoir 20 de l'ingrédient à doser est identifié par les moyens de lecture 110 d'un identifiant et le dispositif 10 est mis en position en regard du réservoir 20, jusqu'à ce que la masse de l'ingrédient acquise par les moyens d'acquisition 120 soit égale à la masse prédéterminée pour l'ingrédient.

Le dispositif 10 peut doser un ingrédient une fois mis en position sur le réservoir 20 adéquat sans nécessiter de commande de la part d'un utilisateur.

Les moyens de commande 125 sont préférentiellement un microprocesseur comportant au moins un programme informatique. Dans des modes de réalisation, à chaque changement de récipient 150, la position du dispositif 10 est restée inchangée, les moyens motorisés 115 sont activés par les moyens de commande 125. Le moteur des moyens motorisés 115 a une vitesse de rotation asservie par les moyens de commande à la masse acquise 7. La vitesse du moteur des moyens motorisés 115 est une fonction de la différence entre la masse acquise et la masse prédéterminée de l'ingrédient.

Ainsi, plus la masse acquise est proche de la masse prédéterminée de l'ingrédient, plus le moteur ralenti de sorte à avoir un dosage précis de l'ingrédient. Ces modes de réalisation permettent d'obtenir un débit de délivrance de l'ingrédient proportionnel à la quantité à délivrer.

Dans des modes de réalisation, les moyens de guidage 105 comportent un capteur de mise en position. Le capteur de mise en position peut être un capteur à induction activé par les moyens de maintien en position 205 du réservoir 20, par exemple. Préférentiellement, le capteur de mise en position détecte que le dispositif 10 est mis en position convenablement dans un réservoir 20.

Dans des modes de réalisation, le dispositif 10 comporte des moyens de lecture 145 d'un identifiant d'un récipient 150 et chaque récipient 150 comporte un identifiant. L'identifiant d'un récipient 150 peut comporter, un numéro d'identification, un nom de l'ingrédient, une composition chimique de l'ingrédient, par exemple. Les moyens de lecture 145 sont fixés au châssis.

Les moyens de lecture 145 de l'identifiant de l'ingrédient correspondent au support d'identifiant du récipient 150. Préférentiellement, les moyens de lecture 145 de l'identifiant sont préférentiellement induisent un champ électromagnétique, selon la norme ISO/CEI 14443. Les moyens de lecture 145 de l'identifiant peuvent être un lecteur de puce RFID (acronyme de « Radio Frequency Identification » en anglais, ou radio-identification en français), ou un lecteur NFC (acronyme de « Near Field Communication » en anglais, ou communication en champ proche en français). Dans ces modes de réalisation, le support d'identifiant du récipient 150 comporte une puce comportant l'identifiant et une antenne.

Dans d'autres modes de réalisation, les moyens de lecture 145 sont un lecteur de code à barres ou de code à barres en deux dimensions (communément appelés QR-code acronyme de « Quick Response Code » ou datamtrix, marque déposée). Dans ces modes de réalisation, le support d'identifiant est un code à barres ou un code à barres en deux dimensions.

Dans d'autres modes de réalisation, les moyens de lecture 145 sont un capteur d'image effectuant une reconnaissance de caractères. Dans ces modes de réalisation, le support d'identifiant est une étiquette imprimée et disposée sur le récipient 150.

Préférentiellement, les moyens de commande 125 comportent des moyens de comparaison de la masse acquise avec la masse prédéterminée.

Dans des modes de réalisation, le dispositif 10 comporte des moyens de communication sans fils configurés pour recevoir au moins une masse prédéterminée. Préférentiellement, les moyens de communication sans fil sont des moyens de communication selon le protocole IEEE 802.11 (ou Wi-fi, marque déposée) ou par Bluetooth (marque déposée).

Préférentiellement, le dispositif 10 peut envoyer des informations sur la mesure de masse de chaque ingrédient acquise par les moyens d'acquisition 210 au terminal communiquant. Ces modes de réalisation permettent une meilleure traçabilité de chaque mélange.

Le dispositif 10 comporte des moyens de stockage d'une masse prédéterminée et d'un identifiant d'un ingrédient à capter connectés au moyens de commande 125.

Dans des modes de réalisation, le dispositif 10 comporte des moyens d'affichage 135 d'au moins une masse prédéterminée et/ou d'au moins un identifiant de l'ingrédient à doser. Les moyens d'affichage 135 sont un écran, par exemple.

Dans des modes de réalisation, le dispositif 10 comporte des moyens manuels de commande des moyens de commande. Lesdits moyens manuels peuvent comporter tout type d'interface homme/machine connue de l'homme du métier.

Dans les modes de réalisation, le dispositif 10 communique, au moyen des moyens de communication sans fil avec un terminal communiquant. Le terminal communiquant envoi au dispositif 10 des informations concernant :
- un identifiant de chaque réservoir 20 auquel le dispositif 10 doit être accouplé pour recevoir un ingrédient,
- les quantités de chaque ingrédient à doser, sous forme de masse prédéterminée,
- l'ordre dans lequel les ingrédients doivent être dosés et
- un indice de tolérance concernant la masse prédéterminée de chaque ingrédient, par exemple.

Les moyens d'affichage 135 peuvent afficher tout ou une partie des informations communiquées. Les moyens manuels de commande sont configurés pour valider, sélectionner ou annuler, des commandes affichées sur les moyens d'affichage 135, par exemple.

Préférentiellement, le dispositif 10 comporte une source d'alimentation électrique autonome alimentant les moyens motorisés 115, les moyens d'acquisition d'une mesure de masse 120, les moyens de commande 125, les moyens d'affichage 135, les moyens de lecture 110 et tout autre composant du dispositif 10 nécessitant une alimentation en électricité.

Préférentiellement, les moyens de commande 125 sont sur le côté de la face opposé au côté comportant les moyens de guidage 105.

Dans des modes de réalisation, le côté comportant les moyens de commande 125 comporte également des poignées 130 de manutention du dispositif. Préférentiellement, les poignées 130 sont répartis uniformément autour de l'axe des moyens motorisés 115.

Dans des modes de réalisation, la mesure de la masse des moyens d'acquisition 120 est mise à zéro avant la mise en œuvre des moyens motorisés 115. Ce tarage permet de déterminer uniquement la masse du nouvel ingrédient apporté dans le récipient 150.

Dans des modes de réalisation, le dispositif 10 comporte de plus un rail 600, disposé en regard d'au moins un réservoir 20, le rail 600 comportant des moyens de déplacement du dispositif sur le rail 600. Le rail 600 comporte de moyens de positionnement d'au moins un réservoir 20 par rapport au rail 600. Les moyens de positionnement sont par exemple un étau fixe par rapport au rail 600 dans lequel un réservoir 20 est inséré. Les moyens de déplacement sont par exemple un moteur pas à pas pour lequel la position de chaque réservoir 20 a été enregistrée dans des moyens de commande préalablement. Dans d'autres modes de réalisation, le positionnement de chaque réservoir 20 est repéré par un actionneur, tel un contact électrique activé lorsque le dispositif 10 est en position dans le rail 600 en regard d'un réservoir 20. Le réservoir 20 est ensuite identifié par l'identifiant de l'ingrédient sur le réservoir 20. Le dispositif 10 est par exemple fixé sur une plateforme sur le rail 600, la plateforme étant liée aux moyens de déplacement par une liaison hélicoïdale, telle une vis sans fin.

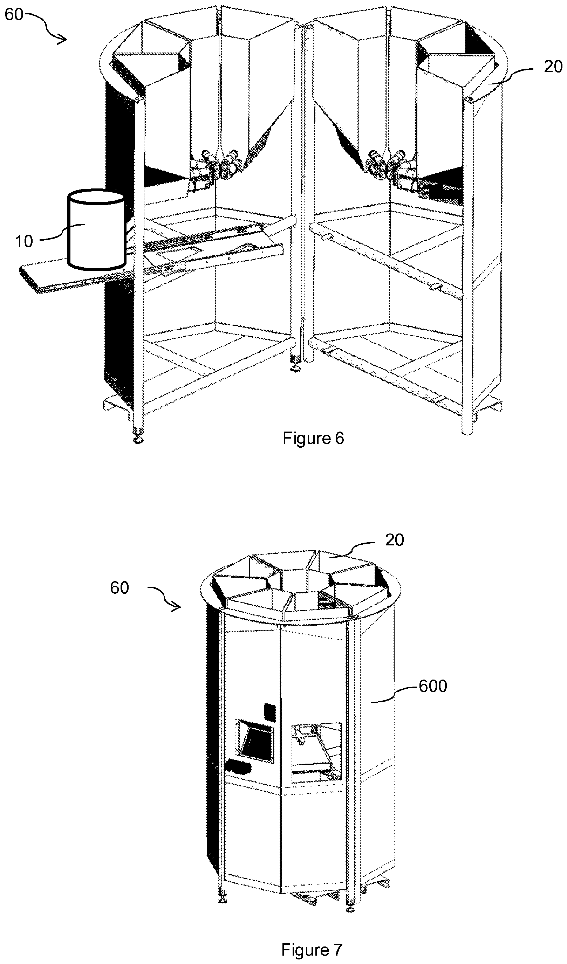

Les figures 6 et 7 représentent un système 60 objet de la présente invention comportant 8 réservoirs 20 et un rail 600. Les réservoirs 20 sont disposés en périphérie du dispositif 10. Le dispositif 10 est tourné pour être en regard du réservoir 20 adéquat.

On observe, sur la figure 2, un mode de réalisation particulier d'un réservoir 20 objet de la présente invention.

Le réservoir 20 comporte un ingrédient à doser par un dispositif 10. Le récipient 20 est de forme sensiblement parallélépipédique rectangle. Les côtés de plus grande longueur sont sensiblement verticaux en conditions d'utilisation du réservoir 20. Une face sensiblement horizontale comporte une ouverture amovible. L'autre face sensiblement horizontale comporte deux pans inclinés 240. L'angle d'inclinaison des pans inclinés 240 est préférentiellement compris entre trente et soixante degrés. Les pans inclinés 240 présentent une intersection au milieu de la face et telle que l'intersection est plus éloignée du centre de gravité du réservoir que le centre de gravité de la surface comportant les intersections des pans inclinés 240 avec le parallélépipède.

Dans les conditions d'utilisation du réservoir 20, l'ouverture du réservoir est sensiblement horizontale et les pans inclinés 240 sont situés plus proche du sol que l'ouverture de sorte à ce que l'ingrédient contenu dans le récipient se déverse, sous l'effet de la gravité, de l'ouverture vers l'intersection des pans inclinés 240. Le volume défini par le parallélépipède, l'ouverture et les pans inclinés 240 est le volume dans lequel est inséré l'ingrédient à délivrer.

Le réservoir 20 comporte des moyens de maintien en position 205 du dispositif 20 correspondant aux moyens de guidage 105 du dispositif 10. Préférentiellement, les moyens de maintien en position 205 sont au moins un relief s'emboîtant avec un relief correspondant 105 sur le dispositif 10. Préférentiellement, le réservoir 20 comporte autant de reliefs de maintien en position 205 que le dispositif 10 comporte de relief de guidage 105.

Préférentiellement, les moyens de maintien en position 205 sont deux alésages traversants d'axes parallèles. Les moyens de maintien en position 205 sont tels que le récipient 150 du dispositif 10 est soutenu en position sensiblement horizontale. Préférentiellement, les alésages traversants traversent une face du réservoir 20 sans créer d'ouverture entre le volume dans lequel est inséré l'ingrédient à délivrer.

Préférentiellement, les moyens de maintien en position 205 comportent une longueur de contact, par exemple, selon l'axe des tiges dans le cas de tiges. La longueur de contact est telle que le dispositif 10 est supporté par le récipient 20 lorsque les moyens de guidage 105 sont insérés dans les moyens de maintien en position 205 du réservoir 20.

Préférentiellement, les moyens de maintien en position 205, empêchent toute rotation du dispositif 10 par rapport au réservoir 20. Par exemple, les moyens de guidage en position 105 emboités dans les moyens de maintien en position 205 réalisent une liaison mécanique de type glissière entre le dispositif 10 et le réservoir 20.

Préférentiellement, les alésages sont situés sur une face du réservoir normale à l'axe d'intersection des pans inclinés 240.

Le réservoir 20 comporte des moyens de délivrance 210 de l'ingrédient à doser activés par les moyens motorisés 115 de délivrance du dispositif 10.

Préférentiellement, les moyens de délivrance 210 sont situés entre les deux alésages à équidistance de chaque alésage 205. Les moyens de délivrance 210 sont liés par une ouverture au volume dans lequel l'ingrédient à délivrer est inséré.

Les moyens de délivrance 210 comportent au moins un relief s'emboitant avec un relief correspondant, sur les moyens motorisés 115 du dispositif 10. Le relief est mobile en rotation, selon un axe, par rapport au réservoir 20. L'axe de rotation est parallèle à l'axe d'intersection des pans inclinés 240. Et un point de l'axe de rotation est aligné avec le centre de gravité du parallélépipède et un point de l'axe d'intersection des pans inclinés 240. Le relief est mis en rotation par le moteur des moyens motorisés 115 du dispositif 10.

Préférentiellement, le relief est un moyeu comportant des cannelures correspondantes aux cannelures d'un arbre des moyens motorisés 115. Dans d'autres modes de réalisation, le relief est un arbre comportant des cannelures et le relief correspondant, sur le dispositif 10, est un moyeu comportant des cannelures correspondantes. L'accouplement des cannelures de l'arbre et du moyeu permet une transmission de puissance.

Le relief crée une ouverture dans la face sur laquelle sont situés les moyens de délivrance 210.

Dans des modes de réalisation préférentiels, le moyeu mis en rotation par les moyens motorisés 115 est lié à une vis sans fin 220. Les moyens de délivrance 210 comportent la vis sans fin 220 dans l'axe de rotation des moyens motorisés 115, mise en rotation par les moyens motorisés de délivrance 115 du dispositif 10. Préférentiellement, les moyens motorisés 115 sont mis en rotation selon le sens antihoraire, en regardant la face comportant les moyens de délivrance 210, si la vis sans fin à un pas à droite. Et selon le sens horaire si la vis sans fin 220 a un pas à gauche.

Préférentiellement, le filetage de la vis sans fin 220 est tangent aux pans inclinés 240. La vis sans fin 220 est de longueur supérieure au segment d'intersection des pans inclinés 240. De sorte que, lorsque la vis sans fin 220 est mise en rotation, l'ingrédient est acheminé dans un tube 250 de section circulaire comportant une ouverture à travers laquelle l'ingrédient tombe sous l'effet de la gravité dans le récipient 150.

Dans des modes de réalisation, les moyens de délivrance 210 comportent des moyens de vibration, 225 et 230, activés par les moyens motorisés 115 de délivrance du dispositif 10.

Les moyens de vibration, 225 et 230, comportent une plaque 230, tangente au filetage de la vis sans fin 220 comprise dans un plan normal à la face comportant les moyens de délivrance 210 et comportant l'axe d'intersection des pans inclinés 240. La plaque 230 est longiligne selon l'axe d'intersection des pans inclinés 240 de dimension sensiblement égale à la longueur du segment d'intersection des pans inclinés 240. La plaque 230 est fixée selon une extrémité à la face du parallélépipède comportant les moyens de délivrance 210 et comporte, à l'autre extrémité, un disque en contact avec la vis sans fin 220. La fixation est une liaison sphérique.

Dans des modes de réalisation, les moyens de vibration, 225 et 230, sont les moyens de délivrance 210 et comportent une plaque inclinée en vibration pour libérer un ingrédient.

Préférentiellement, la vis sans fin 220 comporte une came en contact avec le disque de la plaque 230.

La face opposée à la face comportant les moyens de délivrance 210 comporte un guide 225 comportant une ouverture longitudinale dans laquelle est insérée la plaque.

Ainsi, par rotation des moyens motorisés 115, la vis sans fin est mise en rotation et l'extrémité de la plaque 230 se déplace dans le guide 225 déplaçant l'ingrédient dans le réservoir et évitant le voutement de l'ingrédient. La vitesse de rotation des moyens motorisés 115 créé donc des secousses au moyen de la plaque 230 et du guide 225.

Préférentiellement, les moyens de délivrance 210 comportent des moyens de fluidification 235 de l'ingrédient. Préférentiellement, les moyens de fluidification 235 de l'ingrédient sont au moins une griffe 235 fixée à l'axe de la vis sans fin 220 dans le tube 250. Chaque griffe 235 permet de gratter l'ingrédient compact apporté par la vis sans fin 220 dans le tube 250 et de rompre d'éventuels agglomérats.

Dans des modes de réalisation, le tube 250 comporte un volet ouvert par les moyens de délivrance 210 lors de la mise en rotation des moyens motorisés 115. Le volet est fermé lors de l'arrêt de la rotation des moyens motorisés 115. Le volet permet d'éviter, lors de la mise en position du dispositif 10 sur un réservoir 20 ne comportant pas l'ingrédient à doser, de délivrer en partie l'ingrédient. Préférentiellement, le volet est disposé à l'ouverture du tube 250 à travers laquelle l'ingrédient tombe sous l'effet de la gravité dans le récipient 150. Le volet est ouvert juste avant la délivrance, et fermée juste après. De tels modes de réalisation évitent qu'un ingrédient ne tombe dans le récipient durant l'accostage, aussi applelé mise en position du dispositif 10 sur le réservoir 20, et durant la phase de retrait du dispositif 10 du réservoir 20.

Le volet peut être un tube concentrique au tube 250, tel que le diamètre intérieur du volet est sensiblement égal au diamètre extérieur du tube 250. Le volet est en liaison glissière avec le tube 250. L'actionnement des moyens motorisés 115 fait glisser le volet sur le tube 250 et libère l'ouverture du tube 250.

Le réservoir 20 comporte un support d'identifiant 215 de l'ingrédient contenu par le réservoir 20 correspondant aux moyens de lecture 110 du dispositif 10.

Préférentiellement, le support d'identifiant 215 est situé sur la face comportant les moyens de délivrance 210. L'identifiant d'un ingrédient peut comporter, un numéro d'identification, un nom de l'ingrédient, une composition chimique de l'ingrédient, par exemple.

Préférentiellement, lorsque moyens de lecture 110 de l'identifiant induisent un champ électromagnétique, selon la norme ISO/CEI 14443, le support d'identifiant 215 comporte une étiquette électronique activée par un champ électromagnétique, telle une étiquette NFC ou RFID.

Dans d'autres modes de réalisation, les moyens de lecture 110 sont un lecteur de code à barres ou de code à barres en deux dimensions (communément appelés QR-code acronyme de « Quick Response Code » ou datamatrix, marque déposée). Dans ces modes de réalisation, le support d'identifiant 215 est un code à barres ou un code à barres en deux dimensions.

Dans d'autres modes de réalisation, les moyens de lecture 110 sont un capteur d'image effectuant une reconnaissance de caractères. Dans ces modes de réalisation, le support d'identifiant 215 est une étiquette imprimée et disposée sur le réservoir 20.

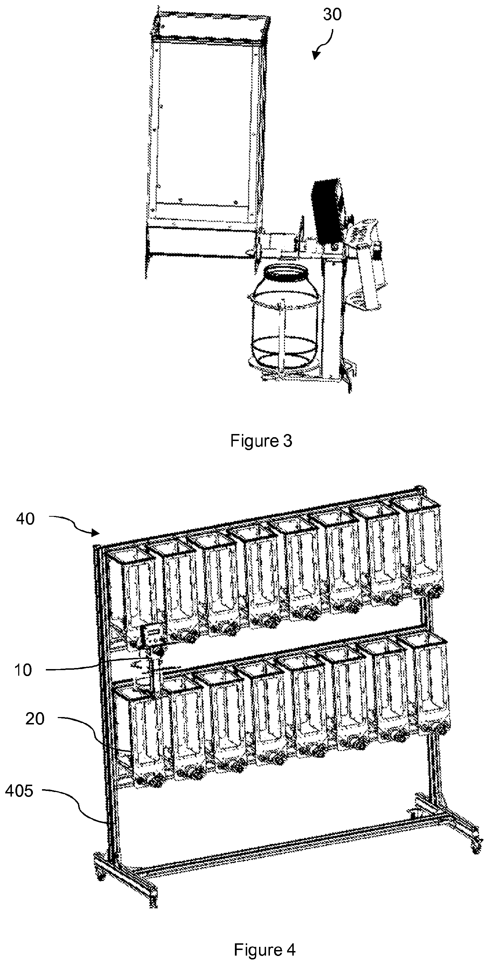

On observe sur la figure 3, un mode de réalisation d'un système 30 de dosage d'au moins un ingrédient comportant un réservoir 20 et un dispositif 10. Sur le mode de réalisation du système représenté en figure 4, les moyens de guidage en position 105 du dispositif 10 sont insérés dans les moyens de maintien 205 du réservoir 20. Le réservoir 20 est identifié par les moyens de lecture 110 et les moyens motorisés 115 sont emboités avec les moyens de délivrance 210 du réservoir 20.

Dans des modes de réalisation, seul le dispositif 10 est alimenté en courant électrique.

Ces modes de réalisation permettent de rendre tous les éléments autres que le dispositif 10, passifs. C'est par exemple le cas des réservoirs 20 qui ne nécessitent aucune alimentation électrique.

On note ici que le dispositif 10 est dit « actif » puisque le dispositif 10 comporte les éléments moteurs de délivrance de l'ingrédient. Et le réservoir 20 est dit « passif » puisque sans activation au moyen du dispositif 10, l'ingrédient n'est pas délivré.

On observe sur la figure 4, un mode de réalisation d'un système 40 de dosage d'au moins un ingrédient comportant plusieurs réservoirs 20 et un dispositif 10. Les réservoirs 20 sont répartis en deux lignes sur une étagère 405. L'étagère 405 comporte huit réservoirs 20 par ligne.

Sur le mode de réalisation du système 40 représenté en figure 4, les moyens de guidage en position 105 du dispositif 10 sont insérés dans les moyens de maintien 205 d'un réservoir 20. Le réservoir 20 est identifié par les moyens de lecture 110 et les moyens motorisés 115 sont emboités avec les moyens de délivrance 210 du réservoir 20.

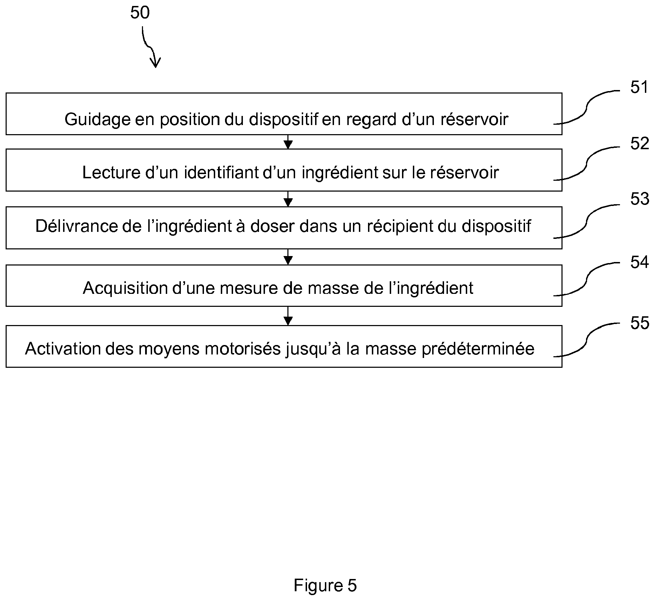

On observe sur la figure 5, un procédé 50 de dosage d'au moins un ingrédient associé à une masse prédéterminée au moyen d'un système 30 ou 40, qui comporte les étapes suivantes :
- guidage 51 en position d'un dispositif 10 en regard d'au moins un réservoir 20 comportant un ingrédient à doser,
- lecture 52 d'un identifiant d'un ingrédient sur le réservoir 20 comportant ledit ingrédient,
- délivrance 53 de l'ingrédient à doser depuis le réservoir 20,
- acquisition 54 d'une mesure de masse de l'ingrédient,
- activation 55 des moyens motorisés du dispositif 10 lorsque le réservoir 20 de l'ingrédient à doser est identifié par les moyens de lecture 110 d'un identifiant du dispositif 10 et le dispositif 10 est mis en position en regard du réservoir 20, jusqu'à ce que la masse de l'ingrédient acquise par les moyens d'acquisition 120 soit égale à la masse prédéterminée pour l'ingrédient.

Préférentiellement, les étapes du procédé 50 sont réalisées dans l'ordre indiqué ci-dessus.

Préférentiellement, préalablement à l'étape de guidage 51, une étape de communication entre le terminal communiquant et le dispositif 10 a été mise en œuvre. Lors de cette étape, le terminal communiquant envoie au dispositif 10 des informations, enregistrées par une mémoire des moyens de commande 125, concernant :
- un identifiant de chaque réservoir 20 auquel le dispositif 10 doit être accouplé pour recevoir un ingrédient,
- les quantités de chaque ingrédient à doser, sous forme de masse prédéterminée,
- l'ordre dans lequel les ingrédients doivent être dosés et
- un indice de tolérance concernant la masse prédéterminée de chaque ingrédient, par exemple.

Le procédé 50 peut également comporter une étape d'affichage de tout ou partie des informations communiquées sur les moyens d'affichage 135 du dispositif 10.

Lors de l'étape de guidage 51, un utilisateur manipule le dispositif 10 jusqu'à emboiter les moyens de guidage 105 du dispositif 10 avec les moyens de maintien 205 du réservoir. Le procédé 50 peut comporter une étape de détection de la mise et du maintien en position du dispositif 10. Tant que la mise en position et le maintien en position n'ont pas été détectés, par un capteur de présence, par exemple, le procédé affiche un message indiquant à un utilisateur que le dispositif 10 est mal placé par rapport au réservoir 20, par exemple.

Une fois l'étape de guidage effectuée, une étape de lecture 52 d'un identifiant d'un ingrédient sur le réservoir 20 comportant ledit ingrédient est effectuée par les moyens de lecture 110 du dispositif 10. Les moyens de lecture 110 lisent un support d'identifiant 215 sur le réservoir 20.

Si l'identifiant lu correspond à l'identifiant enregistré et dans la suite de l'ordre enregistré par les moyens de commande 125, les moyens de commandent passent à l'étape de délivrance 53, l'étape d'acquisition 54 et l'étape d'activation 55. Sinon, un message indiquant que le réservoir ne correspond pas au réservoir délivrant l'ingrédient à doser est affiché sur les moyens d'affichage 135.

Les étapes de délivrance 53, d'acquisition 54 et d'activation 55 sont mises en place simultanément. Ainsi, l'étape d'activation 55 est mise en œuvre, la délivrance 53 de l'ingrédient a donc lieu, jusqu'à ce que la masse de l'ingrédient acquise par les moyens d'acquisition 120, lors de l'étape d'acquisition 24, soit égale à la masse prédéterminée pour l'ingrédient.

L'étape d'activation est terminée lorsque la masse acquise lors de l'étape d'acquisition est dans les bornes définies par un intervalle de tolérance autour de la masse prédéterminée pour ledit ingrédient.

Dans des modes de réalisation, avant chaque étape d'activation 55, une étape d'acquisition 54 de la masse sur les moyens d'acquisition 120 entraine la mise à zéro, par une tare, de la mesure de masse des moyens d'acquisition 120. Le procédé 50 peut comporter une étape de mise à zéro de la mesure de masse.

Dans des modes de réalisation, un utilisateur peut changer de récipient 150 une fois l'étape d'activation 55 terminée. Dans ces modes de réalisation, l'utilisateur indique aux moyens de commande d'effectuer de nouveau les étapes de délivrance 53, d'acquisition 54 et d'activation 55 pour le nouveau récipient 150 et le même ingrédient. L'étape d'indication aux moyens de commande peut être mise en œuvre par les moyens manuels de commande.

## Revendications

1. Dispositif (10) portable de dosage d'au moins un ingrédient associé à une masse prédéterminée, ayant
- des moyens de guidage (105) en position en regard d'au moins un réservoir (20) comportant un ingrédient à doser,
- des moyens de lecture (110) d'un identifiant d'un ingrédient sur le réservoir comportant ledit ingrédient,
- des moyens motorisés (115) de délivrance de l'ingrédient à doser depuis le réservoir,
- des moyens d'acquisition (120) d'une mesure de masse de l'ingrédient,
et **caractérisé en ce que** qu'il comporte:
- des moyens de commande (125) configurés pour activer les moyens motorisés lorsque le réservoir de l'ingrédient à doser est identifié par les moyens de lecture d'un identifiant et le dispositif est mis en position en regard du réservoir, jusqu'à ce que la masse de l'ingrédient acquise par les moyens d'acquisition soit égale à la masse prédéterminée pour l'ingrédient.

2. Dispositif (10) selon la revendication 1, qui comporte au moins deux récipients (150) de réception de chaque ingrédient à doser, et dans lequel, les moyens de commande (125) sont configurés pour activer, à chaque changement de récipient, les moyens motorisés (115) lorsque le réservoir (20) de l'ingrédient à doser est identifié par les moyens de lecture (110) d'un identifiant et le dispositif est mis en position en regard du réservoir, jusqu'à ce que la masse de l'ingrédient acquise par les moyens d'acquisition (120) soit égale à la masse prédéterminée pour l'ingrédient.

3. Dispositif (10) selon la revendication 2, qui comporte des moyens de lecture (145) d'un identifiant d'un récipient (150) et dans lequel, chaque récipient comporte un identifiant.

4. Dispositif (10) selon l'une des revendications 1 à 3, qui comporte des moyens de communication sans fils configurés pour recevoir au moins une masse prédéterminée.

5. Dispositif (10) selon l'une des revendications 1 à 4, qui comporte des moyens d'affichage (135) d'au moins une masse prédéterminée et/ou d'au moins un identifiant de l'ingrédient à doser.

6. Dispositif (10) selon l'une des revendications 1 à 5, dans lequel la mesure de la masse par les moyens d'acquisition (120) est mise à zéro avant la mise en œuvre des moyens motorisés (125).

7. Dispositif (10) selon l'une des revendications 1 à 6, dans lequel les moyens motorisés (115) comportent un moteur dont la vitesse est une fonction de la différence entre la masse acquise et la masse prédéterminée de l'ingrédient.

8. Dispositif (10) selon l'une des revendications 1 à 7, qui comporte de plus un rail (600), disposé en regard d'au moins un réservoir (20), le rail comportant des moyens de déplacement du dispositif (10) sur le rail.

9. Réservoir (20) comportant un ingrédient à doser par un dispositif (10) selon l'une des revendications 1 à 8, **caractérisé en ce qu'**il comporte :
- des moyens de maintien (205) en position du dispositif correspondant aux moyens de guidage (105) du dispositif,
- des moyens de délivrance (210) de l'ingrédient à doser activés par les moyens motorisés (115) de délivrance du dispositif,
- un support d'identifiant (215) de l'ingrédient contenu par le réservoir correspondant aux moyens de lecture (110) du dispositif.

10. Réservoir (20) selon la revendication 9, dans lequel les moyens de délivrance (210) comportent une vis sans fin (220) mise en rotation par les moyens motorisés (115) de délivrance du dispositif (10).

11. Réservoir (20) selon l'une des revendications 9 ou 10, dans lequel les moyens de délivrance (210) comportent des moyens de vibration (225, 230) activés par les moyens motorisés (115) de délivrance du dispositif.

12. Réservoir (20) selon l'une des revendications 9 à 11, dans lequel les moyens de délivrance (210) comportent des moyens de fluidification (235) de l'ingrédient.

13. Système (30, 40, 60) de dosage d'au moins un ingrédient comportant au moins un réservoir (20) selon l'une des revendications 9 à 12 et au moins un dispositif (10) selon l'une des revendications 1 à 8.

14. Système (30, 40, 60) selon la revendication 13, dans lequel seul le dispositif (10) est alimenté en courant électrique.

15. Procédé (50) de dosage d'au moins un ingrédient associé à une masse prédéterminée au moyen d'un système (30, 40) selon l'une des revendications 13 ou 14, **caractérisé en ce qu'**il comporte les étapes suivantes :
- guidage (51) en position d'un dispositif (10) en regard d'au moins un réservoir (20) comportant un ingrédient à doser,
- lecture (52) d'un identifiant d'un ingrédient sur le réservoir comportant ledit ingrédient,
- délivrance (53) de l'ingrédient à doser depuis le réservoir,
- acquisition (54) d'une mesure de masse de l'ingrédient,
- activation (55) des moyens motorisés (115) du dispositif lorsque le réservoir de l'ingrédient à doser est identifié par les moyens de lecture (110) d'un identifiant du dispositif et le dispositif est mis en position en regard du réservoir, jusqu'à ce que la masse de l'ingrédient acquise par les moyens d'acquisition soit égale à la masse prédéterminée pour l'ingrédient.

## Patentansprüche

1. Tragbare Dosierungsvorrichtung (10) wenigstens einer Zutat, die einer vorbestimmten Masse zugeordnet ist, aufweisend:
- Führungsmittel (105) in der Position gegenüber wenigstens einem Tank (20), der eine zu dosierende Zutat umfasst,
- Lesemittel (110) einer Kennung einer Zutat auf dem Tank, der die genannte Zutat umfasst,
- motorisierte Freisetzungsmittel (115) der ab dem Tank zu dosierenden Zutat,
- Erwerbsmittel (120) einer Massemessung der Zutat, und **dadurch gekennzeichnet, dass** sie umfasst:
- Steuermittel (125), die zum Aktivieren der motorisierten Mittel ausgestaltet sind, wenn der Tank der zu dosierenden Zutat von den Lesemitteln einer Kennung identifiziert ist und die Vorrichtung gegenüber dem Tank in Stellung gebracht ist, bis die Masse der Zutat, die von den Erwerbsmitteln erworben ist, gleich der für die Zutat vorbestimmten Masse ist.

2. Vorrichtung (10) gemäß Anspruch 1, die wenigstens zwei Empfangsbehälter (150) jeder zu dosierenden Zutat umfasst und bei dem die Steuermittel (125) zum Aktivieren der motorisierten Mittel (115) bei jedem Behälterwechsel ausgestaltet sind, wenn der Tank (20) der zu dosierenden Zutat von den Lesemitteln (110) einer Kennung identifiziert ist und die Vorrichtung gegenüber dem Tank in Stellung gebracht ist, bis die Masse der Zutat, die von den Erwerbsmitteln (120) erworben ist, gleich der für die Zutat vorbestimmten Masse ist.

3. Vorrichtung (10) gemäß Anspruch 2, die Lesemittel (145) einer Kennung eines Behälters (150) umfasst und in der jeder Behälter eine Kennung umfasst.

4. Vorrichtung (10) gemäß einem der Ansprüche 1 bis 3, die drahtlose Kommunikationsmittel zum Empfangen wenigstens einer vorbestimmten Masse ausgestaltet ist.

5. Vorrichtung (10) gemäß einem der Ansprüche 1 bis 4, die Anzeigemittel (135) wenigstens einer vorbestimmten Masse und/oder wenigstens einer Kennung der zu dosierenden Zutat umfasst.

6. Vorrichtung (10) gemäß einem der Ansprüche 1 bis 5, bei der die Messung der Masse durch die Erwerbsmittel (120) vor der Umsetzung der motorisierten Mittel (125) auf Null gestellt ist.

7. Vorrichtung (10) gemäß einem der Ansprüche 1 bis 6, bei dem die motorisierten Mittel (115) einen Motor umfassen, dessen Geschwindigkeit eine Funktion der Differenz zwischen der erworbenen Masse und der vorbestimmten Masse der Zutat ist.

8. Vorrichtung (10) gemäß einem der Ansprüche 1 bis 7, die darüber hinaus eine Schiene (600) umfasst, die gegenüber wenigstens einem Tank (20) angeordnet ist, wobei die Schiene Verschiebungsmittel der Vorrichtung (10) auf der Schiene umfasst.

9. Tank (20), der eine von einer Vorrichtung (10) gemäß einem der Ansprüche 1 bis 8 zu dosierende Zutat umfasst, **dadurch gekennzeichnet, dass** er umfasst:
- Haltemittel (205) der Vorrichtung in der Position, die den Führungsmitteln (105) der Vorrichtung entsprechen,
- Freisetzungsmittel (210) der zu dosierenden Zutat, die von den motorisierten Freitsetzungsmitteln (115) der Vorrichtung aktiviert sind,
- Identifizierungsträger (215) der in dem Tank enthaltenen Zutat, der den Lesemitteln (110) der Vorrichtung entspricht.

10. Tank (20) gemäß Anspruch 9, bei dem die Freisetzungsmittel (210) eine Endlosschnecke (220) umfassen, die von den motorisierten Freisetzungsmitteln (115) der Vorrichtung (10) in Drehung versetzt ist.

11. Tank (20) gemäß einem der Ansprüche 9 oder 10, bei dem die Freisetzungsmittel (210) Vibrationsmittel (225, 230) umfassen, die von den motorisierten Freisetzungsmitteln (115) der Vorrichtung aktiviert sind.

12. Tank (20) gemäß einem der Ansprüche 9 bis 11, bei dem die Freisetzungsmittel (210) Verflüssigungsmittel (235) der Zutat umfassen.

13. Dosierungssystem (30, 40, 60) wenigstens einer Zutat, die wenigstens einen Tank (20) gemäß einem der Ansprüche 9 bis 12 und wenigstens eine Vorrichtung (10) gemäß einem der Ansprüche 1 bis 8 umfasst.

14. System (30, 40, 60) gemäß Anspruch 13, bei dem nur die Vorrichtung (10) mit elektrischem Strom versorgt ist.

15. Dosierungsverfahren (50) wenigstens einer Zutat, die einer vorbestimmten Masse mittels eines Systems (30, 40) gemäß einem der Ansprüche 13 oder 14 zugeordnet ist, **dadurch gekennzeichnet, dass** es die folgenden Schritte umfasst:
- Führung (51) in der Position einer Vorrichtung (10) gegenüber wenigstens einem Tank (20), der eine zu dosierende Zutat umfasst,
- Lesen (52) einer Kennung einer Zutat auf dem Tank, der die genannte Zutat umfasst,
- Freisetzung (53) der ab dem Tank zu dosierenden Zutat,
- Erwerb (54) einer Massemessung der Zutat.
- Aktivierung (55) der motorisierten Mittel (115) der Vorrichtung, wenn der Tank der zu dosierenden Zutat von den Lesemitteln (110) einer Kennung der Vorrichtung identifiziert ist und die Vorrichtung gegenüber dem Tank in Stellung gebracht ist, bis die Masse der Zutat, die von den Erwerbsmitteln erworben ist, gleich der für die Zutat vorbestimmten Masse ist.

## Claims

1. A mobile device (10) for measuring out of at least one ingredient associated with a predetermined mass, having :
- means (105) for guiding into position opposite at least one reservoir (20) comprising an ingredient to be measured out,
- means (110) for reading an identifier of an ingredient on the reservoir comprising said ingredient,
- motorized means (115) for delivering the ingredient to be measured out from the reservoir,
- means (120) for acquiring a measurement of the mass of the ingredient, and **characterized in that** it comprises :
- control means (125) configured to activate the motorized means when the reservoir of the ingredient to be measured out is identified by the means for reading an identifier and the device is positioned opposite the reservoir, until the mass of the ingredient acquired by the means of acquisition is equal to the predetermined mass for the ingredient.

2. The device (10) according to claim 1, which comprises at least two containers (150) for receiving each ingredient to be measured out, and wherein, the control means (125) are configured to activate at each change of container, the motorized means (115) when the reservoir (20) of the ingredient to be measured out is identified by the means (110) for reading an identifier and the device is positioned opposite the reservoir, until the mass of the ingredient acquired by the acquisition means (120) is equal to the predetermined mass for the ingredient.

3. The device (10) according to claim 2, which comprises the means of reading (145) an identifier of a container (150) and wherein, each container comprises an identifier.

4. The device (10) according to one of claims 1 to 3, which comprises wireless communication means, configured to receive at least one predetermined mass.

5. The device (10) according to one of claims 1 to 4, which comprises means (135) for displaying at least one predetermined mass and/or at least one identifier of the ingredient to be measured out.

6. The device (10) according to one of claims 1 to 5, wherein the mass measurement by the acquisition means (120) is set to zero before the implementation of the motorized means (125).

7. The device (10) according to one of claims 1 to 6, wherein the motorized means (115) comprise a motor of which the speed is in accordance with the difference between the acquired mass and the predetermined mass of the ingredient.

8. The device (10) according to one of claims 1 to 7, which further comprises a rail (600), arranged opposite to at least one reservoir (20), the rail comprising the means for moving the device (10) over the rail.

9. A reservoir (20) comprising an ingredient to be measured out by a device (10) according to one of claims 1 to 8, **characterized in that** it comprises:
- means (205) for holding the device corresponding to the guiding means (105) of the device in position.
- means for delivering (210) the ingredient to be measured out, activated by the motorized delivery means (115) of the device.
- an identifier support (215) for the ingredient contained by the reservoir corresponding to the reading means (110) of the device.

10. The reservoir (20) according to claim 9, wherein the delivery means (210) comprise a worm screw (220) rotated by the motorized delivery means (115) of the device (10).

11. The reservoir (20) according to one of claims 9 or 10, wherein the delivery means (210) comprise vibration means (225, 230) activated by the motorized delivery means (115) of the device.

12. The reservoir (20) according to one of claims 9 to 11, wherein the delivery means (210) comprise means (235) for fluidizing the ingredient.

13. A system (30, 40, 60) for the measuring out of at least one ingredient comprising at least one reservoir (20) according to one of claims 9 to 12 and at least one device (10) according to one of claims 1 to 8.

14. The system (30, 40, 60) according to claim 13, wherein only the device (10) is powered by electric current.

15. A method (50) for measuring out at least one ingredient associated with a predetermined mass by means of a system (30, 40) according to one of claims 13 or 14, **characterized in that** it comprises the following steps:
- the guiding (51) into position of a device (10) opposite at least one reservoir (20) comprising an ingredient to be measured out.
- the reading (52) of an identifier of an ingredient on the reservoir comprising said ingredient,
- the delivery (53) of the ingredient to be measured out from the reservoir,
- the acquiring (54) of a mass measurement of the ingredient,
- the activating (55) of the motorized means (115) of the device when the reservoir of the ingredient to be measured out is identified by the means (110) for reading an identifier of the device and the device is positioned opposite the reservoir, until the mass of the ingredient acquired by the acquisition means is equal to the predetermined mass for the ingredient.
